# EUROPÄISCHE PATENTANMELDUNG

(11) **EP 2 361 938 A1**
(43) Veröffentlichungstag der Anmeldung: **31.08.2011**
(21) Anmeldenummer: 10001665.8
(22) Anmeldetag: 18.02.2010
(51) Int. Cl.: C08G 18/08, C09D 5/20, C09D 175/06

(54) **Lichtechte Beschichtungsmittel**

(71) Anmelder: Bayer MaterialScience AG, 51368 Leverkusen (DE)
(72) Erfinder: Peerlings, Henricus, Dr., 42699 Solingen (DE); Gertzmann, Rolf, Dr., 51377 Leverkusen (DE)

(57) **Zusammenfassung**

Die vorliegende Erfindung betrifft neue recyclisierbare Abziehlacke basierend auf colösarfreien, wässrigen, lichtechten, anionischen Polyurethanpolyharnstoffen, Verfahrenen zu ihrer Herstellung und ihre Verwendung als Lack, vorzugsweise als Abziehlack zum temporären Schutz von Kraftfahrzeugen, Flugzeugen, Stahl- und Aluminiumprofilen, Glas- und Kunststotischeiben und beliebigen anderen Substraten und Verfahren zur Wiederverwertung der gebrauchten abgezogenen Lackschichten.

## Beschreibung

Die vorliegende Erfindung betrifft neue Abziehlacke basierend auf colöserfreien, wässrigen, lichtechten, anionischen Polyurethanpalyharnstoffen, Verfahrenen zu ihrer Herstellung und ihre Verwendung als Lack, vorzugsweise als Abziehlack zum temporären Schutz von Kraftfahrzeugen, Flugzeugen, Stahl- und Aluminiumprofilen, Glas- und Kunststoffscheiben und beliebigen anderen Substraten und Verfahren zur Wiederverwertung der gebrauchten abgezogenen Lackschichten.

Anionische Polyurethanpolyharnstoffdispersionen sind prinzipiell bekannt. Auch colöserfreie, wässrige, anionische Polyurethandispenionen, Verfahren zu ihrer Herstellung und ihre Verwendung als Lacke, Beschichtungsmittel, Klebstoffe und Abziehlacke sind im Stand der Technik bekannt. In der DE-A 19 653 585 wird diesbezüglich der einschlägige Stand der Technik gewürdigt.

Die DE-A 19 653 585 beschreibt Polyharnstoffdispersionen die nach der physikalischen Trocknung bei 20 bis 100°C transparente hochglänzende, UV-beständige, temperaturbeständige (-30 bis 80°C), gegen Niederschläge (organischer oder anorganischer Natur) resistente Lacke, die einerseits gut haften und andererseits durch Abziehen leicht entfernt werden können. Die Reißfestigkeit und Dehnung der Lackschichten sind angemessen hoch wie z.B. beschrieben in DE-A 19 653 585.

Aus der WO 98/23692 sind Mischungen von Polyolefinen bekannt, die als Abziehlacke für Automobile verwendet werden. Jedoch enthalten diese Mischungen keine PUR-Bestandteile. Die hier beschriebenen Abziehlacke sind auch nicht recyclisierbar.

In DE-A 10311420 werden Polyether-basierte Abziehlacke beschrieben, welche allerdings nicht die erforderliche Lichtstabilität aufweisen.

EP-B 1072652 und EP-A 1132413 beschreiben aufwendige Verfahren zur Herstellung von Polyurethandispersionen, wobei eine Mischung aus zwei Polyurethandispersionen mit unterschiedlicher Glasübergangstemperatur oder eine zusätzliche Pfropfung Acrylatmonomere auf die Polyurethandispersion durchgeführt wird.

In EP-A 1338634 und DE-A 10311420 wird grundsätzlich beschrieben, dass eine Mischung aus Carboxylatgruppen-haltigen als auch Sulfonatgruppen-haltigen Hydrophilierungsmittel verwendet werden kann.

Es besteht nun von den Anwendern derartiger Lacke der Wunsch nach Beschichtungsmitteln, die nach ihrer Verwendung in Lacken neben der üblichen vorteilhaften Eigenschaften wie beispielsweise Lichtstabilität und Säurebeständigkeit eine bessere Wasserfestigkeit und Abziehbarkeit zeigen.

Eine Aufgabe der vorliegenden Erfindung war es daher, neue wässrige anionische Polyurethan-Dispersionen zur Verfügung zu stellen, die bei ihrer Verwendung Lacke und Beschichtungen ergeben, die eine verbesserte Abziehfähigkeit und Wasserfestigkeit zeigen.

Ebenfalls eine Aufgabe der vorliegenden Erfindung war es daher, neue wässrige anionische Polyurethan-Dispersionen zur Verfügung zu stellen, die bei ihrer Verwendung Lacke und Beschichtungen ergeben, die eine verbesserte Abziehfähigkeit und Wasserfestigkeit zeigen, ohne dass andere vorteilhafte Eigenschaften wie hohe Lichtechtheit, hohe Transparenz, hohe Temperaturbeständigkeit und hohe Resistenz gegen Niederschläge (organischer und anorganischer Natur) beeinträchtigt werden.

Es wurde nun überraschenderweise gefunden, daß die gewünschten anwendungstechnischen Eigenschaften erhalten werden, wenn als Hydrophilierungsmittel eine Mischung aus Carboxylgruppen- und Sulfonylgruppen-haltigen Substanzen in einem bestimmten Verhältnis und in einer bestimmten Menge bezogen auf alle Komponenten des Polyurethan-Polymers eingesetzt wird.

Gegenstand der Erfindung sind daher lichtechte Beschichtungsmittel enthaltend einen wässrigen, anionischen Polyurethaupolyharnstoff, welcher einer Mischung aus Carboxylgruppen-und Sulfonylgruppen-haltigen Substanzen enthält.

Weiterer Gegenstand der Erfindung sind auch daraus hergestellte lichtechte Lacke, wobei diese auf beliebige Substrate aufgebracht und bei Temperaturen bis zu 150°C getrocknet werden können.

Geeignete Dispersionen für das erfindungsgemäße lichtechte Beschichtungsmittel, basierend auf colöser-armen bzw. colöser-freien wässrigen, anionischen Dispersionen von Polyurethanpolyharnstoffen, deren Festkörper das zumindest teilweise in der Salzform vorliegende Umsetzungsprodukt enthält aus
a) wenigstens ein NCO-Prepolymer umfassend
i) 20 bis 60 Gew.% wenigstens eines Diisocyanate,
ii) 20-80 Gew.-% wenigstens eines Makrodioles mit einem zahlenmittleren Molgewicht von 500 bis 10 000,
iii) 2 bis 12 Gew.% wenigstens einer 2,2-Bis-(hydroxymethyl)-alkan-monocarbonsäure,
iv) 0 bis 15 Gew.% wenigstens eines kurzkettigen Diols mit einem zahlenmittleren Molekulargewicht von 62 bis 400,
v) 0 bis 10 Gew.-% wenigstens eines monofunktionellen Alkohols mit einem zahlenmittleren Molekulargewicht von 32 bis 350,
b1) 1 bis 10 Gew.% wenigstens einer N-(2-Aminoalkyl)-2-Aminoalkylsulfonsäure,
b2) 0 bis 15 Gew.-% wenigstens eines Diamins mit einem Molekulargewicht von 60 bis 300,
c) 0 bis 10 Gew.-% wenigstens eines monofunktionellen Amins,
d) 0 bis 3 Gew.-% Wasser und
e) 0 bis 10 Gew.-% wenigstens eines Neutralisationsmittels,
wobei in der Prepolymerstufe a) ein NCO-Gehalt von 65 bis 85 des berechneten NCO-Gehalts eingestellt wird, die Summe von aiii) und bl) im Bereich von 3 bis 15 Gew.-% liegt und das Verhältnis von aiii) zu bl) im Bereich von 6:1 bis 1:1 liegt.

Vorzugsweise wird in der Prepolymerstufe a) ein NCO-Gehalt von 75 bis 80 % des berechneten NCO-Gehalts eingestellt wird.

Vorzugsweise liegt die Summe von aiii) und bl) im Bereich von 3 bis 10 Gew.-%, besonders bevorzugt im Bereich von 3 bis 8 Gew.-%.

Vorzugsweise liegt das Verhältnis von aiii) zu bl) im Bereich von 5:1 bis 1:1.

Vorzugsweise liegt die Säurezahl des Prepolymers im Bereich von 5 bis 20 mg Kohle, besonderes bevorzugt im Bereich von 8 bis 18 mg KOH/g.

Die erfindungsgemäß verwendeten Polyurethan-Dispersionen sind Colöser-arm. Die erfindungsgemäß verwendeten Polyurethan-Dispersionen enthalten bevorzugt 0,0 bis 0,9 Gew.- %, besonders bevorzugt 0,0 bis 0,5 Gew.%, ganz besonders bevorzugt 0,0 bis 0,4 Gew.-% an Colösern, bezogen auf die Gesamtmenge der Polyurethan-Dispersion.

Die erfindungsgemäßen Polymermischungen sind Colöser-arm. Die erfindungsgemäß verwendeten Polyurethan-Dispersionen enthalten bevorzugt 0,0 bis 0,9 Gew.%, besonders bevorzugt 0,0 bis 0,5 Gew.-%, ganz besonders bevorzugt 0,0 bis 0,4 Gew.-% an Colösern, bezogen auf die Gesamtmenge der Polyurethan-Dispersion.

Colöser im Sinne der vorliegenden Erfindung sind polare organische Lösemittel. Vorzugsweise sind Colöser organische Lösemittel mit einem Hansen-Parameter im Bereich von 7.2 bis 16.0 (cal/cm³)^{0,5}, wie sie in "Polymer Handbooks", Eds. Brandrup, J.; Immergut, E.H.; Grulke, E.A., 4th Edition, John Wiley, New York, 1999, VII/Seite 675-711 veröffentlicht sind.

Bevorzugte Colöser im Sinne der vorliegenden Erfindung sind polare organische Lösemittel ausgewählt aus der Gruppe bestehend aus Aceton, Methylethylketon, Butyldiglykol, Dimethylsulfoxid, N-Ethylpyrrolidon, Dimethylformamid, Dimethylacetamid und Dipropylenglykoldimethylether.

Das erfindungsgemäße Beschichtungsmittel weist bevorzugt einen Gehalt an Feststoff im Bereich von 20 - 60 Gew.-%, besonders bevorzugt im Bereich von 30 - 40 Gew.-%, in Wasser auf.

Als Komponente a)i) werden bevorzugt aliphatische und/oder cycloaliphatische Diisocyanate verwendet, wie beispielsweise Diisocyanate ausgewählt aus der Gruppe bestehend aus Isophorondiisocyanat (IPDI), 4,4'-Dicyclohexyl-methandiisocyanat, 1-Methyl-2,4-diisocyanato-cyclohexan, 1-Methyl-2,6-diiso-cyanato-cyclohexan, 1,6-Hexamethylen-diisocyanat und 1,3-Cyclohexan-diisocyanat.

Die Mitverwendung von geringen Anteilen an aromatischen Diisocyanaten wie beispielsweise 2,4- und 2,6-Toluoldiisocyanat oder 2,4'- und 4,4'-Diphenylmethandiisocyanat ist ebenfalls möglich.

Als Komponente a)ii) werden Makrodiole mit einem Molekulargewicht von 500 bis 10 000 eingesetzt. Hierbei handelt es sich bevorzugt um Polyesterdiole, die durch Umsetzung von Dicarbonsäuren bzw. deren Anhydriden mit Diolen gegebenenfalls unter Zuhilfenahme üblicher Veresterungskatalysatoren vorzugsweise nach dem Prinzip einer Schmelz- oder Azeotropkondensation bei Temperaturen von 140 - 240°C erhalten werden.

Beispiele geeigneter Dicarbonsäuren bzw. deren Anhydriden sind Adipinsäure, Bernsteinsäure(anhydrid), Maleinsäure(anhydrid), Sebacinsäure, Azelainsäuren, Dimerfettsäuren (in hydrierter und nicht-hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz, wie z.B. Ethylenglykol, 1,2- und 1,3-Propandiol, 1,3- und 1,4-Butandiol, 1,6- Hexandiol, Diethylenglykol, Dipropylenglykol, Neopentylglykol oder Mischungen derartiger Diole. Bevorzugt als Komponente a)ii) sind Polyesterdiole aus Adipinsäure, Hexandiol und Neopentylglykol.

Ebenfalls geeignet als Komponente a)ii) sind Polycarbonatdiole, Polycaprolactondiole, Hydroxypolytetrahydrofurane oder Hydroxypolyether auf Basis von Propylenoxid. Geeignete Polycarbonatdiole werden z.B. erhalten, indem Kohlensäurederivate, wie z.B. Diphenylcarbonat oder Phosgen mit Alkoholen, vorzugsweise Diolen der genannten Art, umgesetzt werden.

Die mittlere Molmasse der Polyole der Komponente a)ii) liegt zwischen 500 und 10 000, bevorzugt zwischen 700 und 4000, besonders bevorzugt sind Makrodiole mit Molmassen zwischen 1000 und 2500.

Bei den Ausgangskomponenten a)iii) handelt es sich bevorzugt um 2,2-Bis-(hydroxymethyl)-alkanmonocarbonsäuren mit insgesamt 5 - 8 Kohlenstoffatomen, d.h. Verbindungen der allgemeinen Formel (I), 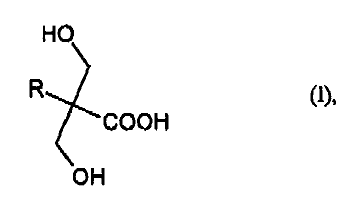 in welcher

R für einen Alkylrest mit 1 - 4 Kohlenstoffatomen steht.

Bevorzugt steht R für einen unsubstituierten Alkylrest mit 1 - 4 Kohlenstoffatomen.

Ganz besonders bevorzugt ist die Komponente a)iii) 2,2-Dimethylolpropionsäure.

Als Ausgangskomponente a)iv) kommen kurzkettigen Diole mit einem Molekulargewicht im Bereich von 62 - 400 in Betracht. Besonders bevorzugt als Komponente a)iv) ist 1,4-Butandiol.

Als Ausgangskomponente a)v) kommen Alkohole mit einem Molekulargewicht im Bereich von 32 bis 350 in Betracht. Vorzugsweise werden Alkohole ausgewählt aus der Gruppe bestehend aus Methanol, Ethanol, Butanol, Hexanol, 2-Ethylhexanol, Oktanol und Dodecanol verwendet.

Als Komponente bl) kommen Verbindungen der allgemeinen Formel (II) in Betracht,

H₂N-R¹-NH-R2-SO₃R³ (II),

wobei R¹ und R², unabhängig voneinander, für eine C₁ bis C₆-Alkandiyl-Einheit, bevorzugt für Ethylen, stehen, und R³ für H oder Alkali, bevorzugt Na, steht.

Als Komponente b2) können alle aliphatischen und/oder cycloaliphatischen Verbindungen verwendet werden, die mindestens zwei gegenüber Isocyanaten reaktive Aminogruppen tragen und eine Molekulargewicht im Bereich von 60 bis 300 aufweisen. Hierfür in Frage kommen insbesondere Ethylendiamin, Propylendiamin, Hexamethylendiamin, Isophorondiamin, p-Xylylendiamin, 4,4'-Diamino-dicyclohexylmethan und 4,4'-Diamino-3,3' dimethyldicyclohexylmethan.

Als Komponente c) kommen neben Ammoniak und Alkanolaminen ebenfalls monofunktionelle Amine, wie primäre Amine aus der Gruppe Methylamin, Ethylamin, n-Propylamin, n-Butylamin, n-Octylamin, Laurylamin, Stearylamin, Isopropylamin und Cyclohexylamin, sowie sekundäre Amine wie Dimethylamin, Diethylamin, Diisopropylamin, Dibutylamin und Piperidin in Betracht. Besonders bevorzugt werden sekundäre Amine wie Dibutylamin. Selbstverständlich können aus Mischungen aus diesen zum Einsatz kommen.

Als Neutralisationsmittel e) sind zum Beispiel Ammoniak, N-Methylmorpholin, Dimethylisopropanolamin, Triethylamin, Dimethylethanolamin, Methyldiemanolalamin, Triethanolamin, Morpholin, Tripropylamin, Ethanolamin, Diethanolamin, Triisopropanolamin, N-Ethyldiisopropylamin und Gemische daraus geeignet.

Bevorzugt sind lichtechte Beschichtungsmittel umfassend
a) wenigstens ein NCO-Prepolymer umfassend
i) 20 bis 60 Gew.-% wenigstens eines Diisocyanate,
ii) 20-80 Gew.-% wenigstens eines Makrodioles mit einem Molgewicht von 500 bis 10 000,
iii) 2 bis 12 Gew.-% Dimethylolpropionsäure,
iv) 0 bis 15 Gew.-% wenigstens eines kurzkettigen Diols mit einem Molekulargewicht von 62 bis 400,
v) 0 bis 10 Gew.-% wenigstens eines monofunktionellen Alkohols mit einem Molekulargewicht von 32 bis 350,
b1) 1 bis 10 Gew.-% Natriumsalz der N-(2-Aminoethan)-2-aminoethansulfonsäure,
b2) 0 bis 15 Gew.-% wenigstens eines Diamins mit einem Molekulargewicht von 60 bis 300,
c) 0 bis 10 Gew.-% wenigstens eines monofunktionellen Amins,
d) 0 bis 3 Gew.-% Wasser und
e) 0 bis 10 Gew.-% wenigstens eines Neutralisationsmittels,
wobei in der Prepolymerstufe a) ein NCO-Gehalt von 65 bis 85 des berechneten NCO-Gehalts eingestellt wird, die Summe von aiii) und b1) im Bereich von 3 bis 15 Gew.-% liegt und das Verhältnis von aiii) zu b1) im Bereich von 6:1 bis 1:1 liegt.

Ein weiterer Gegenstand der vorliegenden Erfindung ist ein Verfahren zur Herstellung von wässrigen Polyurethan-Dispersionen. In einer bevorzugten Ausführungsform werden die Komponenten a)i), ii) und iii) in einem Reaktor vorgelegt und unter wasserfreien Bedingungen in einem Temperaturbereich von 50 - 150°C, bevorzugt 50 - 110°C, umgesetzt, danach wird abgekühlt und dem Ansatz technisch übliches Aceton sowie ggf. das kurzkettige Diol (iv) und ggf. monofunktionelle Alkohole (v) zugegeben und solange erhitzt, bis der NCO-Gehalt der Mischung auf einen Wert von 65 bis 85 % des berechneten NCO-Gehalts gefallen ist. Auf diese Weise entsteht das NCO-Prepolymer. Danach wird der Ansatz mit weiterem Aceton verdünnt und mit der berechneten Menge eines Gemisches aus Diamin und Kettenabbrecher (Komponenten b1), b2) und c)) - gelöst in Wasser - versetzt. Auf diese Weise werden 90 % der NCO-Gruppen mit dem Kettenverlängerer, dem Diamin und dem Kettenabbrecher umgesetzt. Das verbleibende Isocyanat wird mit dem vorhandenen Wasser zum erfindungsgemäßen Polyurethanpolyharnstoff umgesetzt.

Die Polymeraufbaureaktion wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u. a. gebräuchliche Katalysatoren).

Wenn kein NCO mehr nachweisbar ist, beispielsweise nach entsprechender Kontrolle mittels IR, wird dem Ansatz die berechnete Menge Neutralisationsmittel, bevorzugt Ammoniaklösung, zugegeben, so dass 50 - 100 % der vorliegenden Carboxylgruppen durch das Neutralisationsmittel bzw. Ammoniak neutralisiert werden.

Durch Zugabe von Wasser und anschließendem Entfernen des eingesetzten Acetons durch Destillation wird die gewünschte Festkörperkonzentration eingestellt. Polyurethanpolyharnstoffdispersionen, die nach dem erfindungsgemäßen Verfahren gewonnen werden, weisen bevorzugt einen Gehalt an Feststoff im Bereich von 20 - 60 Gew.-%, besonders bevorzugt im Bereich von 30 ― 40 Gew.-%, in Wasser auf.

Die Polyurethandispersion weist Teilchen mit einem mittleren Teilchendurchmesser bevorzugt im Bereich von 20 - 1,000 nm, besonders bevorzugt im Bereich von 50 - 500 nm auf, gemessen mit der Methode der dynamischen Lichtstreuung nach ISO 13320-1.

Die pH-Werte der weißen, erfindungsgemäß verwendeten, lagerstabilen Polyurethanpolyhamstoffdispersionen liegen im Bereich von 6-9.

Die Dispersion kann mit anderen anionischen oder nicht ionischen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoffdispersionen.

Eine gegebenenfalls gewünschte pH-Anpassung der Mischungen kann mit organischen oder anorganischen Basen erfolgen, wie z.B. Ammoniak, Alkalicarbonate, Amine, Aminoalkohole, wobei organische Basen bevorzugt sind. Ganz besonders bevorzugt ist 2-Amino-2-methyl-1-propanol.

Ein weiterer Gegenstand der Erfindung ist auch die Verwendung der Polyurethanpolyharnstoffes in Beschichtungsmitteln, um hochglänzende, lichtechte, wetterfeste, lösemittelfreie Lacke und Überzüge herzustellen. Diese Lacke und Überzüge dienen zum Schutz von Kraftfahrzeugen, Stahl-, Aluminium- und Metallgegenständen jeglicher Art, Glas- und Kunststoffgegenständen jeglicher Art, mineralischen Untergründen, Mauerwerk oder Natursteinen, zum Korrosionsschutz von Schiffen, Brücken, Flugzeugen, Eisenbahnen, zum Schutz von Holz- und Naturstoffgegenständen und beliebigen anderen Substraten. Die Beschichtungsmittel werden durch Tauchen, Rakeln, Gießen, Sprühen, Pinseln oder Spritzen aufgetragen und anschließend bei 120 bis 150°C getrocknet.

Gegenstand der Erfindung ist auch die Verwendung der Polyurethanpolyhamstoffes in Beschichtungsmitteln zur Herstellung von recyclisierbare Abziehlacken. Diese Abziehlacke dienen zum temporären Schutz von Kraftfahrzeugen, Eisenbahnen, Schiffen, Möbeln, Metallgegenständen, mineralischen Gegenständen, Glas- und Kunststoffgegenständen und beliebigen anderen Substraten. Die Beschichtungsmittel werden dazu durch Tauchen, Rakeln, Gießen, Sprühen, Spritzen oder Pinseln aufgetragen und anschließend bei 20 bis 100°C, bevorzugt bei 20 bis 80°C, durch Wärme oder Infrarotlicht, Mikrowellenbestrahlung oder Beschallung, getrocknet.

Die erfindungsgemäßen Überzüge sind wasserfeste, transparente, reißfeste, UV-beständige, temperaturbeständige, gegen Niederschläge (organischer oder anorganischer Natur) beständige, gegebenenfalls pigmentierte Beschichtungen, die einerseits auf den Substraten haften und andererseits durch Abziehen leicht entfernt werden können.

Bei der Formulierung der Lacke können die in der Lackchemie üblichen Hilfsmittel, wie z.B. Pigmente, Lichtstabilisatoren. Antiabsetzmittel, Verdicker, oberflächenaktive Verbindungen, Entschäumer etc. eingesetzt werden.

Die Applikation der Lacke erfolgt nach den üblichen Methoden der Lacktechnologie durch Tauchen, Rakeln, Gießen, Sprühen, Spritzen, Pinseln oder Walzen. Sie dienen als Abziehlack zum temporären Schutz von Kraftfahrzeugen, Stahl- und Aluminium-profilen, Glas-und Kunststoffscheiben bzw. Artikeln. Nach Applikation werden die lackierten Teile bei Raumtemperatur oder bei erhöhter Temperatur bis zu 100°C getrocknet.

Die erfindungsgemäßen Polyurethanharnstoffdispersionen werden bis zu 30 Minuten bei 140-150°C getrocknet, so dass auf den Substraten gut haftende Überzüge entstehen. Trocknungstemperaturen über 150°C sind selbstverständlich auch möglich, aber die Anwendung derart hoher Temperaturen ist im Allgemeinen unwirtschaftlich.

### Beispiele

### Beispiel 1 (nicht erfindungsgemäß):

In einem Reaktionsgefäß werden 170 g (0,1 mol) eines Polyesters aus Adipinsäure, 1,6-Hexandiol und Neopentylglykol mit einem durchschnittlichen Molekulargewicht von 1,700 g/mol und 2 % OH 30 Minuten bei 120°C und 10 mbar unter Rühren entwässert. Unter Stickstoff werden 10,5 g (0,078 mol) Dimethylolpropionsäure und 111 g (0,5 mol) Isophorondiisocyanat eingetragen. Nach 1 Stunde Reaktionszeit bei 110°C wird der Ansatz auf 60°C abgekühlt und in 100 g Aceton gelöst. Nach Zugabe von 19,8 g (0,22 mol) 1,4-Butandiol wird 22 Stunden bei 50°C nachgerührt. Der NCO-Gehalt beträgt 1,60 % (berechnet 2,06 %). Es wird mit 600 g Aceton verdünnt. Zum NCO-Prepolymer wird bei 50°C zuerst 9,5 g (0,056 mol) Isophorondiamin, in 60 g Wasser 2,22 g (0,017 mol) und anschließend Dibutylamin gegeben. Anschließend wird 5 Stunden bei 50°C nach gerührt. Es wird mit 7,2 g (0,063 mol) 15 %-iger Ammoniaklösung neutralisiert und mit 463 g Wasser dispergiert. Das Aceton bei 50°C und 150 mbar entfernt und es wird eine weiße Dispersion mit einem Feststoffgehalt von 38 % und einer mittleren Teitchengröße von 218 nm erhalten.

Der Neutralisationsgrad beträgt 81 % und das Verhältnis DMPS (Dimethylolpropionsäure) zu AAS (Natriumsalz der N-(2-Aminoethan)-2-Aminuethansulfonsäure = 100:0.

Die Säurezahl des Prepolymers beträgt 14 mg KOH/g und die Gesamtmenge Hydrophilierungsmittel 3,12 Gew.-% bezogen auf die Menge an Festharz.

### Beispiel 2 (nicht erfindungsgemäß):

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff werden 111g (0,5 mol) Isophorondiisocyanat eingetragen. Nach 1 Stunde Reaktionszeit bei 110°C wird der Ansatz auf 60°C abgekühlt und in 100 g Aceton gelöst. Nach Zugabe von 23 g (0,26 mol) 1,4-Butandiol wird 22 Stunden bei 50°C nachgerührt. Der NCO-Gehalt beträgt 2,68 % (berechnet 2,95 %). Es wird mit 600 g Aceton verdünnt. Zum NCO-Prepolymer wird bei 50°C zuerst 2,5 g (0,019 mol) Dibutylamin, danach ein wässrige Mischung bestehend aus 10,6 g (0,062 mol) Isophorondiamin, 18,4 g einer 45 Gew.-% AAS-Lösung in 116 g Wasser gegeben. Anschließend wird 5 Stunden bei 50°C nach gerührt. Es wird mit 405 g Wasser dispergiert. Das Aceton wird bei 50°C und 150 mbar entfernt und eine weiße Dispersion mit einem Feststoffgehalt von 33,5 % und einer mittleren Teilchengröße von 149 nm und einem pH-Wert (10 % Feststoff) von 6,93 erhalten.

Der Neutralisationsgrad beträgt 0 % und das Verhältnis DMPS zu AAS = 0:100. Die Säurezahl des Prepolymers beträgt 0 mg KOH/g und die Gesamtmenge Hydrophilierungsmittel 2,55 Gew.-% bezogen auf die Menge an Festharz.

### Beispiel 3:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff werden 7 g (0,052 mol) Dimethylolpropionsäure und 111 g (0,5 mol) Tsopherondiisocyanat eingetragen. Nach 1 Stunde Reaktionszeit bei 110°C wird der Ansatz auf 60°C abgekühlt und in 100 g Aceton gelöst. Nach Zugabe von 19,8 g (0,22 mol) 1,4-Butandiol wird 22 Stunden bei 50°C nachgerührt. Der NCO-Gehalt beträgt 2,12 % (berechnet 2,62 %). Es wird mit 600 g Aceton verdünnt. Zum NCO-Prepolymer wird bei 50°C zuerst 2,22 g (0,017 mol) Dibutylamin, danach eine wässrige Lösung bestehend aus 9,5 g (0,056 mol) Isophorondiamin, 10,89 g einer 45%-igen AAS-Lösung in 82 g Wasser gegeben. Anschlie-Bend wird 5 Stunden bei 50°C nachgerührt. Es wird mit 442 g Wasser dispergiert, Das Aceton wird bei 50°C und 150 mbar entfernt und so eine weiße Dispersion mit einem Feststoff gehalt von 39,4 % und einer mittleren Teilchengröße von 164 nm bei einem pH-Wert (10% Feststoff) von 6,80 erhalten.

Der Neutralisationsgrad beträgt 0 % und das Verhältnis DMPS zu AAS = 1,4:1. Die Säurezahl des Prepolymers beträgt 9,5 mg KOH/g und die Gesamtmenge Hydrophilierungsmittel 3,65 Gew.-% bezogen auf die Menge an Festharz.

### Beispiel 4:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff werden 11,9 g (0,089 mol) Dimethylolpropionsäure und 111 g (0,5 mol) Isophorondiisocyanat eingetragen. Nach 1 Stunde Reaktionszeit bei 110°C wird der Ansatz auf 60°C abgekühlt und in 100 g Aceton gelöst. Nach Zugabe von 19 g (0,21 mol) 1,4-Butandiol wird 22 Stunden bei 50°C nachgerührt. Der NCO-Gehalt beträgt 1,66 % (berechnet 2,06 %). Es wird mit 600 g Aceton verdünnt. Zum NCO-Prepolymer wird bei 50°C zuerst 2,22 g (0,017 mol) Dibutylamin, danach eine wässrige Lösung bestehend aus 7,29 g (0,043 mol) Isophorondiamin 5,45 g einer 45%-igen AAS-Lösung in 51 g Wasser gegeben. Anschlie-Bend wird 5 Stunden bei 50°C nachgerührt. Es wird mit 2,13 g einer 15 Gew.-%igen Ammoniak-Lösung neutralisiert und anschließend mit 430 g Wasser dispergiert. Das Aceton wird bei 50°C und 150 mbar entfernt und so eine weiße Dispersion mit einem Feststoffgehalt von 40,5 % und einer mittleren Teilchengröße von 201 nm bei einem pH-Wert (10% Feststoff) von 8,24 erhalten.

Der Neutralisationsgrad beträgt 10 % und das Verhältnis DMPS zu AAS = 4,8:1. Die Säurezahl des Präpolymers beträgt 16 mg KOH/g und die Gesamtmenge Hydrophüierungsmittel 4,43 Gew.-% bezogen auf die Menge an Festharz.

### Beispiel 5:

In einem Reaktionsgefäß werden 170 g (0,1 mol) eines Polyesters aus Adipinsäure, 1.6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff werden 11,9 g (0,089 mol) Dimethylolpropionsäure und 111 g (0,5 mol) Isophorondiisocyanat eingetragen. Nach 1 Stunde Reaktionszeit bei 110°C wird der Ansatz auf 60°C abgekühlt und in 100 g Aceton gelöst. Nach Zugabe von 19 g (0,21 mol) 1,4-Butandiol wird 22 Stunden bei 50°C nachgerührt. Der NCO-Gehalt beträgt 1,65 % (berechnet 2,06 %). Es wird mit 600 g Aceton verdünnt. Zum NCO-Prepolymer wird bei 50°C zuerst 2,22 g (0,017 mol) Dibutylamin, danach eine wässrige Lösung bestehend aus 7,29 g (0,043 mol) Isophorondiamin, 5,45 g einer 45%-igen AAS-Lösung in 51 g Wasser gegeben. Anschlie-Bend wird 5 Stunden bei 50°C nachgerührt. Es wird mit 4,44 g einer 15 Gew.-%igen Ammoniak-Lösung neutralisiert und anschließend mit 430 g Wasser dispergiert. Das Aceton wird bei 50°C und 150 mbar entfernt und so eine weiße Dispersion mit einem Feststoffgehalt von 30,3 % und einer mittleren Teilchengröße von 89 nm bei einem pH-Wert (10% Feststoff) von 8,17 erhalten.

Der Neutralisationsgrad beträgt 20 % und das Verhältnis DMPS zu AAS = 4,8:1. Die Säurezahl des Präpolymers beträgt 16 mg KOH/g und die Gesamtmenge Hydrophiliarungsmittel 4,42 Gew.-% bezogen auf die Menge an Festharz.

### Beispiel 6:

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff werden 6,9 g (0,052 mol) Dimethylolpropionsäure und 111 g (0,5 mol) Isophorondiisocyanat eingetragen. Nach 1 Stunde Reaktionszeit bei 110°C wird der Ansatz auf 60°C abgekühlt und in 100 g Aceton gelöst. Nach Zugabe von 20 g (0,22 mol) 1,4-Butandiol wird 22 Stunden bei 50°C nachgerührt. Der NCO-Gehalt beträgt 2,11 % (berechnet 2,62 %). Es wird mit 600 g Aceton verdünnt. Zum NCO-Prepolymer wird bei 50°C zuerst 2,22 g (0,017 mol) Dibutylamin, danach eine wässrige Lösung bestehend aus 11,73 g (0,069 mol) Isophorondiamin 5,45 g einer 45%-igen AAS-Lösung in 69 g Wasser gegeben. Anschließend wird 5 Stunden bei 50°C nachgerührt. Es wird mit 3,56 g einer 15 Gew.-%-igen Ammoniak-Lösung neutralisiert und anschließend mit 460 g Wasser dispergiert. Das Aceton wird bei 50°C und 150 mbar entfernt und so eine weiße Dispersion mit einem Feststoffgehalt von 36,4 % und einer mittleren Teilchengröße von 128 nm bei einem pH-Wert (10% Feststoff) von 8,7 erhalten.

Der Neutralisationsgrad beträgt 60 % und das Verhältnis DMPS zu AAS = 2,8:1. Die Säurezahl des Präpolymers beträgt 9,5 mg KOH/g und die Gesamtmenge Hydrophilierungsmittel 2,9 Gew.-% bezogen auf die Menge an Festharz.

### Prüfung der Wasserfestigkeit am Film

Von beiden Dispersionen wurde einen Film ohne Hilfe eines Colösers mit einem Kastenrakel (150 µm) aufgezogen und 24 Stunden in einem Wasserbad gelagert. Danach wurden die Abziehbarkeit und die Trübung des Films qualitativ beurteilt. Zusätzlich wurde die Lagerstabilität überprüft durch ein kontinuierliches umpumpen der Dispersion bei 40°C. Nach 24 h wurde qualitativ beurteilt ob sich Agglomerat gebildet hat.

| Beispiel | Abziehbarkeit | Agglomerat |
|---|---|---|
| 1 | Gut | Ja |
| 2 | Film löst sich | nein |
| 3 | Gut | nein |
| 4 | Gut | nein |
| 5 | Gut | nein |
| 6 | Gut | nein |

Das Vergleichsbeispiel 1 beschreibt eine Polyurethandispersion, wobei nur DMPS als Hydrophilierungsmittel verwendet wurde. Die Abziehbarkeit ist zwar gut, der Pumptest zeigt aber Agglomerat, das beim Applizieren im Film zu unerwünschte Stippenbildung führt.

Das Vergleichsbeispiel 2 beschreibt eine Polyurethandispersion, wobei nur AAS zur Hydrophilierung eingesetzt wurde. Die Dispersion ist zwar stabil im Pumptest, löst sich aber zu einfach bei der Wasserlagerung vom Substrat, welches beim Transport der behandelten Fahrzeugen bei feuchten Wetterbadingungen zum Ablösen des Films führen kann.

Die erfindungsgemäßen Beispielen 3 bis 6, bestehend aus einer Mischung aus beiden Hydrophilieningsmittel erfüllen sowohl die Anforderungen an der Pumpstabilität als auch eine gute Abziehbarkeit.

## Patentansprüche

1. Lichtechte Beschichtungsmittel umfassend
a) wenigstens ein NCO-Prepolymer umfassend
i) 20 bis 60 Gew.-% wenigstens eines Diisocyanates,
ii) 20-80 Gew.-% wenigstens eines Makrodioles mit einem zahlenmittleren Molgewicht von 500 bis 10 000,
iii) 2 bis 12 Gew.-% wenigstens einer 2,2-Bis-(hydroxymethyl)-alkanmonocarbonsäure,
iv) 0 bis 15 Gew.-% wenigstens eines kurzkettigen Diols mit einem zahlenmittleren Molekulargewicht von 62 bis 400,
v) 0 bis 10 Gew.-% wenigstens eines monofunktionellen Alkohols mit einem zahlenmittleren Molekulargewicht von 32 bis 350,
bl) 1 bis 10 Gew.-% wenigstens einer N-(2-Aminoalkyl)-2-Aminoalkylsulfonsäure,
b2) 0 bis 15 Gew.-% wenigstens eines Diamins mit einem Molekulargewicht von 60 bis 300,
c) 0 bis 10 Gew.-% wenigstens eines monofunktionellen Amins,
d) 0 bis 3 Gew.-% Wasser und
e) 0 bis 10 Gew.-% wenigstens eines Neutralisationsmittels,
wobei in der Prepolymerstufe a) ein NCO-Gehalt von 65 bis 85 % des berechneten NCO-Gehalts eingestellt wird, die Summe von aiii) und bl) im Bereich von 3 bis 15 Gew.-% liegt und das Verhältnis von aiii) zu bl) im Bereich von 6:1 bis 1:1 liegt.

2. Beschichtungsmittel gemäß Anspruch 1, wobei in der Prepolymerstufe a) ein NCO-Gehalt von 75 bis 80 % des berechneten NCO-Gehalts eingestellt wird.

3. Beschichtungsmittel gemäß Anspruch 1, wobei die Summe von aiii) und bl) im Bereich von 3 bis 10 Gew.-% liegt.

4. Beschichtungsmittel gemäß Anspruch 1, wobei das Verhältnis von aiii) zu bl) im Bereich von 5:1 bis 1:1 liegt.

5. Beschichtungsmittel gemäß Anspruch 1, wobei die Säurezahl des Prepolymers im Bereich von 5 bis 20 mg KOH/g liegt.

6. Beschichtungsmittel gemäß Anspruch 1, wobei die Komponente aiii) Dimethylolpropionsäure ist.

7. Beschichtungsmittel gemäß Anspruch 1, wobei die Komponente bl) das Natriumsalz der N-(2-Aminoethan)-2-sulfonsäure ist.

8. Verfahren zur Herstellung einer wässriger Beschichtungsmittel umfassend die Schritte
- Vorlegen der Komponenten a)i), ii) und iii) in einem Reaktor unter wasserfreien Bedingungen in einem Temperaturbereich von 50 - 150°C,
- Zugabe von Aceton sowie ggf. Komponenten a)iv) und ggf. Komponente a) v) und Erhitzen bis der NCO-Gehalt der Mischung auf einen Wert von 65 bis 85 % des berechneten NCO-Gehalts gefallen ist,
- Zugabe von Aceton und Komponente bl) und ggf. Komponenten b2), c) und e).

9. Verwendung der Beschichtungsmittel gemäß einem oder mehreren der Ansprüche 1 bis 7 als Lacke und Überzüge.

10. Verwendung der Beschichtungsmittel gemäß einem oder mehreren der Ansprüche 1 bis 7 als Lacke und Überzüge zum Schutz von Kraftfahrzeugen, Stahl-, Aluminium-und Metallgegenständen jeglicher Art, Glas- und Kunststoffgegenständen jeglicher Art, mineralischen Untergründen, Mauerwerk oder Natursteinen, zum Korrosionsschutz von Schiffen, Brücken, Flugzeugen, Eisenbahnen, zum Schutz von Holz- und Naturstoffgegenständen.

11. Verwendung der Beschichtungsmittel gemäß einem oder mehreren der Ansprüche 1 bis 7 als recyclisierbare Abziehlacke.

12. Lackschicht erhalten aus einem Beschichtungsmittel gemäß einem oder mehreren der Ansprüche 1 bis 7.
